# EUROPEAN PATENT APPLICATION

(11) **EP 4 230 270 A1**
(43) Date of publication of application: **23.08.2023**
(21) Application number: 21883064.4
(22) Date of filing: 05.10.2021
(51) Int. Cl.: A62C 37/38, A62C 35/11, A62C 35/02, A62C 35/68, A62C 3/10, A62C 3/16, B63H 21/17

(54) **SYSTEM FOR EXTINGUISHING FIRE IN BATTERY LOADING CONTAINER IN ELECTRIC PROPULSION SHIP**

(30) Priority: 19.10.2020 KR 20200135097
(71) Applicant: First C&D Co., Ltd, Hwaseong-si, Gyeonggi-do 18469 (KR)
(72) Inventor: KIM, Jong Woo, Hwaseong-si, Gyeonggi-do 18497 (KR); LIM, Jin A, Daejeon 34140 (KR)
(74) Representative: dompatent von Kreisler Selting Werner - Partnerschaft von Patent- und Rechtsanwälten mbB
(86) International application number: PCT/KR2021/013595
(87) International publication number: WO 2022/085992

(57) **Abstract**

Proposed is a system for extinguishing a fire in a battery loading container in an electric propulsion ship. The system includes a loading container having an inlet valve for inflow of fire-fighting water, having an outlet valve for discharging the fire-fighting water, and having an inside formed with a space in which a power supply device including battery cells is provided. Furthermore, the system includes a fire detector detecting the fire by measuring a temperature inside the loading container while the fire detector is provided at an upper portion side of the inside of the loading container, a feeding part feeding the fire-fighting water to the inside of the loading container by using a feeding hose and a pump connected to the inlet valve, and includes a control unit controlling operations of the inlet valve, the outlet valve, and the pump according to a temperature measured in the fire detector.

## Description

### Technical Field

The present disclosure relates to a system for minimizing damage to an electric propulsion ship and for extinguishing an electric fire generated at sea. More particularly, the present disclosure relates to a system for extinguishing a fire, the system being configured such that a plurality of battery cells for supplying a power to an electric propulsion ship is provided inside a box-shaped mobile loading container that has a structure capable of feeding and discharging seawater, thereby minimizing damage caused by an electric fire occurring at sea and rapidly extinguishing the electric fire.

### Background Art

Generally, a type of fuel used for propulsion of a ship is mainly diesel, but such diesel has a higher rate of incomplete combustion than gasoline and generates smoke during combustion, so that considerable environmental pollution is caused.

For this reason, the International Maritime Organization (IMO) announced strong ship environmental regulations so as to reduce an emission of greenhouse gas by more than 50% compared to 2008 by 2050. Accordingly, each country is accelerating development of an electric propulsion ship that use an electric energy for the propulsion.

Meanwhile, in an electric propulsion ship, a dedicated space in which a plurality of battery cells for supplying electrical energy is capable of being safely stored is required to be necessarily provided, and a fire extinguishing facility for preparing for a fire that may occur due to overheating of the battery cells and so on is required to be provided. However, due to spatial limitations of being positioned at sea and to characteristics of an electric fire, there may be many difficulties in extinguishing a fire by using a conventional fire extinguisher.

In relation to the description described above, as a conventional technology related to an apparatus and so on for extinguishing a fire occurring in a ship, Korean Patent No. 10-1291173 "FIRE EXTINGUISHING SYSTEM FOR SHIP" and Korean Patent No. 10-2088679 "PORTABLE FIRE EXTINGUISHER FOR SHIP" have been proposed and disclosed.

First, in Korean Patent No. 10-1291173 "FIRE EXTINGUISHING SYSTEM FOR SHIP", a system for easily extinguishing a fire occurring in a cabin having a high ceiling and a large floor area has been proposed and disclosed. In Korean Patent No. 10-1291173, at least a part of a concealment space portion formed on a side wall of a cabin is disposed so as to be capable of being partially foldable, a water supplying member for extinguishing a fire configured to be unfolded toward an inside of the cabin from the concealment space portion when water fore extinguishing the fire is supplied inside the water supplying member is included, and a fire detecting portion for detecting a fire and so on are included.

In addition, in Korean Patent No. 10-2088679 "PORTABLE FIRE EXTINGUISHER FOR SHIP", an apparatus not only capable of rapidly extinguishing a fire occurring in a narrow space such as a ship but also capable of being used for extinguishing fires in other ships and removing fog around the ships has been proposed. In Korean Patent No. 10-2088679, guide rails mounted parallel to a longitudinal direction of a ship body on both sides of a deck of the ship in a width direction, a fire extinguishing unit spraying fire-fighting water toward an ignition point while moving along the guide rail, and so on are included.

However, since the conventional technologies described above are simply configured to spray water for extinguishing a fire and are not specifically designed for extinguishing an electric fire, a considerable time is required for extinguishing an electric fire occurring at sea due to overheating of a battery cell when the conventional technologies are applied to an electric propulsion ship, and a problem in which a considerable damage is accumulated may occur.

Therefore, a technology related to a system or an apparatus capable of minimizing damage caused by an electric fire occurring at sea due to overheating of a battery cell that supplies a power to an electric propulsion ship and also capable of rapidly and effectively extinguishing the fire is required.

### Disclosure

### Technical Problem

Accordingly, a system for extinguishing a fire in a battery loading container in an electric propulsion ship according to the present disclosure has been made keeping in mind the above problems occurring in the related art.

Since conventional technologies are simply configured to spray water for extinguishing a fire and are not specifically designed for extinguishing an electric fire, a considerable time is required for extinguishing an electric fire occurring at sea due to overheating of a battery cell and so on when the conventional technologies are applied to an electric propulsion ship, and a problem in which a considerable damage is accumulated may occur, so that an objective of the present disclosure is to provide a solution to the problem described above.

### Technical Solution

In order to achieve the above objective, there is provided a system for extinguishing a fire in a battery loading container in an electric propulsion ship.

The system includes: a box-shaped mobile loading container having a first side of an upper end thereof provided with an inlet valve for inflow of fire-fighting water and having a first side of a lower portion thereof provided with an outlet valve for discharging the fire-fighting water, the loading container having an inside formed with a space in which a power supply device that includes a plurality of battery cells is provided; a fire detector configured to detect a fire by measuring a temperature inside the loading container while being in a state in which the fire detector is provided at an upper portion side of the inside of the loading container; a feeding part configured to feed the fire-fighting water to the inside of the loading container by using a feeding hose and a pump connected to the inlet valve; and a control unit configured to control operations of the inlet valve, the outlet valve, and the pump according to a temperature measured by the fire detector.

At this time, the inlet valve and the outlet valve provided in the loading container are respectively constituted of solenoid valves.

### Advantageous Effects

The system for extinguishing a fire in the battery loading container in the electric propulsion ship according to the present disclosure has effects as follows.

Since the plurality of battery cells for supplying a power to the electric propulsion ship is provided inside the box-shaped mobile loading container having a structure capable of feeding and discharging seawater so that a range of occurrence of an electric fire due to overheating of the battery cells is limited, there are effects that damage caused by an electric fire occurring at sea is capable of being minimized and the electric fire is capable of being rapidly and effectively extinguished.

### Description of Drawings

FIG. 1 is a perspective view illustrating a basic shape of inner and outer portions of a loading container constituting a system for extinguishing a fire in a battery loading container in an electric propulsion ship according to the present disclosure.
FIG. 2 is a flowchart illustrating a fire extinguishing process using the present disclosure.
FIG. 3 is an exemplary view illustrating an embodiment of the present disclosure corresponding to a temperature change inside the loading container.
FIG. 4 is an exemplary view illustrating an embodiment of the present disclosure corresponding to a temperature change and a pressure change inside the loading container.
FIG. 5 is an exemplary view illustrating an embodiment of the present disclosure corresponding to a temperature change and a level change inside the loading container.

### Best Mode

A system for extinguishing a fire in a battery loading container in an electric propulsion ship according to the present disclosure is configured as follows.

The system includes: a box-shaped mobile loading container having a first side of an upper end thereof provided with an inlet valve for inflow of fire-fighting water and having a first side of a lower portion thereof provided with an outlet valve for discharging the fire-fighting water, the loading container having an inside formed with a space in which a power supply device that includes a plurality of battery cells is provided; a fire detector configured to detect a fire by measuring a temperature inside the loading container while being in a state in which the fire detector is provided at an upper portion side of the inside of the loading container; a feeding part configured to feed the fire-fighting water to the inside of the loading container by using a feeding hose and a pump connected to the inlet valve; and a control unit configured to control operations of the inlet valve, the outlet valve, and the pump according to a temperature measured by the fire detector.

### MODE FOR INVENTION

The present disclosure relates to a system for minimizing damage to an electric propulsion ship and for extinguishing an electric fire occurring at sea.

The system includes: a box-shaped mobile loading container 100 having a first side of an upper end thereof provided with an inlet valve 101 for inflow of fire-fighting water and having a first side of a lower portion thereof provided with an outlet valve 102 for discharging the fire-fighting water, the box-shaped mobile loading container 100 having an inside formed with a space in which a power supply device that includes a plurality of battery cells is provided; a fire detector 110 configured to detect a fire by measuring a temperature inside the loading container 100 while being in a state in which the fire detector 110 is provided at an upper portion side of the inside of the loading container 100; a feeding part 120 configured to feed fire-fighting water to the inside of the loading container 100 by using a feeding hose and a pump 121 connected to the inlet valve 101; and a control unit 130 configured to control operations of the inlet valve 101, the outlet valve 102, and the pump 121 according to a temperature measured by the fire detector 110.

Hereinafter, an embodiment of the present disclosure will be described in detail with reference to the accompanying drawings.

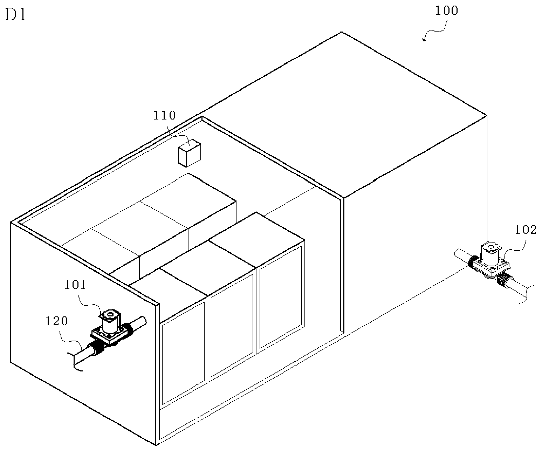

First, as illustrated in FIG. 1, the loading container 100 is a box-shaped container having an inside formed with a space in which the power supply device including the plurality of battery cells is provided. In addition, it is preferable that all or most of a body of the loading container 100 is formed of a steel material so as to minimize external damage caused by an effect of an electric fire occurring inside the loading container 100.

In addition, a cooling and heating device and a ventilation device are provided inside the loading container 100, so that a temperature inside the loading container 100 is maintained at an appropriate temperature and air inside the container 100 is capable of being ventilated.

At this time, the inlet valve 101 is provided on the first side of the upper end of the loading container 100, and the outlet valve 102 is provided on the first side of the lower portion of the loading container 100, so that the inflow of fire-fighting water through the inlet valve 101 and the discharge of the fire-fighting water through the outlet valve 102 are capable of being performed when an electrical fire occurs. Furthermore, such an inlet valve 101 and such an outlet valve 102 are all constituted of solenoid valves for automatically controlling the inflow and the discharge of the fire-fighting water.

In addition, a pressure sensor 103 is provided inside the loading container 100, so that a pressure change inside the loading container 100 that may occur due to various causes is capable of being measured in real time. Furthermore, a measurement value measured by the pressure sensor 103 and together with a measured value measured by the fire detector 110 may be used for automatic control of the inlet valve 101 and the outlet valve 102 by the control unit 130.

In addition, a level sensor 104 is provided inside the loading container 100, so that a level change inside the loading container 100 is capable of being measured in real time. Furthermore, a measurement value measured by the level sensor 104 and together with the measured value measured by the fire detector 110 may be used for automatic control of the inlet valve 101 and the outlet valve 102 by the control unit 130.

In addition, the fire detector 110 illustrated in FIG. 1 is a device configured to detect a fire by measuring a temperature of inside the loading container 100 while being in a state in which the fire detector 110 is provided at the upper portion side of the inside of the loading container 100. Furthermore, the fire detector 110 necessarily includes a temperature sensor configured to measure a temperature, and may additionally include such as a smoke sensor configured to detect smoke.

Therefore, the fire detector 110 is configured to generate a fire signal so as to notify of the occurrence of a fire when the temperature inside the loading container 100 reaches a predetermined temperature or the temperature rises rapidly. Furthermore, when the smoke sensor is provided in the fire detector 110, the smoke sensor may be additionally used for detecting a significant amount of smoke generated inside the loading container 100 to detect the occurrence of a fire.

In addition, as illustrated in FIG. 1, the feeding part 120 is a feeding device including the feeding hose and the pump 121, the feeding hose being configured such that a first distal end portion thereof is connected to the inlet valve 101 provided at the upper end of the loading container 100 and a second distal end is submerged in seawater or fresh water or is connected to a nearby fire hydrant, the pump 121 being configured to transfer seawater toward the inlet valve 101. In addition, as necessary, the feeding part 120 feeds fire-fighting water to the inside of the loading container 100 so that an electric fire occurring inside the loading container 100 is capable of being rapidly extinguished.

That is, the fire-fighting water fed by the feeding part 120 to the inside of the loading container 100 in which the electric fire is occurring may be seawater or fresh water according to a location where the electric propulsion ship is positioned, may be tap water that is capable of being supplied from a nearby fire hydrant, or may be any one of salt water, distilled water, and tap water that are stored in a separate storage part that is mounted together with the loading container 100.

Meanwhile, there may be one outlet valve 102 provided in the loading container 100, but a plurality of outlet valves 102 may be provided in the loading container 100. In this situation in which the plurality of outlet valves 102 are provided, the plurality of outlet valves 102 all constituting of solenoid valves is simultaneously or sequentially controlled by the control unit 130, so that a discharge speed of a fire-fighting water that is introduced inside the loading container 100 is capable of being controlled as needed, and a blockage phenomenon of the outlet valve 102 caused by floating substances and so on which are generated due to a fire or the inflow of a fire-fighting water and which remain inside the loading container 100 is capable of being handled.

Therefore, when the plurality of outlet valves 102 is formed in the loading container 100, the plurality of outlet valves 102 may be mounted such that the plurality of outlet valves 102 is spaced apart from each other by a considerable distance due to the reason of handling the blockage phenomenon.

In addition, in the loading container 100, a plurality of mounting ports for mounting the inlet valve 101 and the outlet valve 102 may be formed in different directions and positions and formed in shapes capable of being opened and closed. Furthermore, a worker and so on who are boarding the electric propulsion ship may change positions where the inlet valve 101 and the outlet valve 102 are mounted in considering a position where the loading container 100 is mounted, and may select the number of valves 101 and 102 to be mounted.

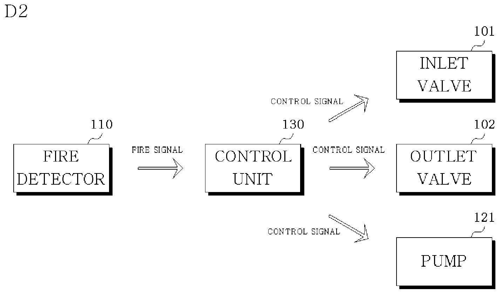

In addition, as illustrated in FIG. 2, the control unit 130 is a corresponding device configured to control operations of the inlet valve 101, the outlet valve 102, and the pump 121 according to a temperature measured in the fire detector 110, thereby automatically extinguishing a fire occurring inside the loading container 100, and it is preferable that the control unit 130 is mounted outside the loading container 100 so that the control unit 130 is not affected by a fire occurring inside the loading container 100.

That is, when a temperature inside the loading container 100 increases to a temperature equal to or more than a first set temperature that is preset, the control unit 130 opens the inlet valve 101 that is constituted of a solenoid valve and the control unit 130 simultaneously drives the pump 121 so that fire-fighting water is capable of being introduced inside the loading container 100 along the feeding hose.

In addition, when a temperature inside the loading container 100 increases to a temperature equal to or more than the first set temperature that is preset, the control unit 130 immediately stops a power supplied to the cooling and heating device and the ventilation device, thereby preventing rapid spread of an electric fire occurring inside the loading container 100.

Therefore, the inside of the loading container 100 in which an electric fire is occurring may be submerged at a level equal to or more than a predetermined level by a large amount of fire-fighting water fed from the outside by the feeding part 120. In addition, the control unit 130 may discharge the fire-fighting water inside the loading container 100 to the outside by opening the outlet valve 102 constituted of a solenoid valve after a predetermined time has elapsed.

At this time, in opening the outlet valve 102, the control unit 130 may use a temperature measured in the fire detector 110 as a reference value for opening the outlet valve 102, and a specific embodiment regarding the control unit 130 is as follows.

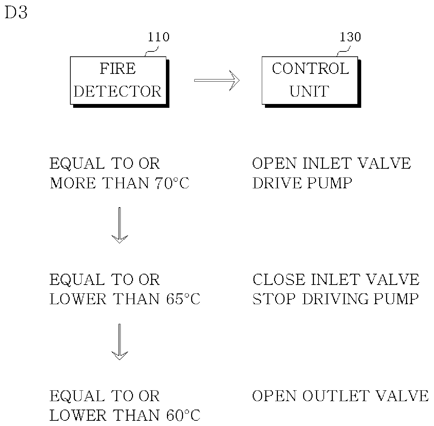

First, as illustrated in Fig. 3, when a temperature detected in the fire detector 110 reaches 70 °C that is the temperature at which a conventional fire alarm device is activated, the control unit 130 may open the inlet valve 101 and may drive the pump 121 at the same time. In this state, when a temperature detected in the fire detector 110 decreases to a temperature equal to or lower than 65 °C, the control unit 130 may close the inlet valve 101 and may stop driving the pump 121 so that the supply of fire-fighting water to the inside of the loading container 100 is stopped.

That is, when a temperature of an upper layer inside the loading container 100 reaches 70 °C, this temperature may be determined as a situation in which a fire occurs inside the loading container 100. Furthermore, when a temperature decreases to a temperature equal to or lower than 65 °C by the supply of the fire-fighting water, this temperature may be determined as a situation in which the fire is extinguished.

In addition, in considering an ignition duration time of the battery cells provided inside the loading container 100, when a temperature detected in the fire detector 110 decreases to a temperature equal to or lower than 55 °C to 60 °C, the control unit 130 may discharge the fire-fighting water inside the loading container 100 to the outside by opening the outlet valve 102.

In addition, when a temperature detected in the fire detector 110 rapidly increases to a temperature equal to or more than a preset reference temperature within a preset time period and a fire signal is generated, the control unit 130 may open the inlet valve 101 and may drive the pump 121 at the same time. In this state, when a temperature detected in the fire detector 110 decreases by equal to or more than 5 °C, the control unit 130 may close the inlet valve 101 and may stop driving the pump 121 at the same time so that the supply of fire-fighting water to the inside of the loading container 100 is stopped.

Then, when a temperature detected in the fire detector 110 further decreases by equal to or more than 5 °C to 10 °C, the control unit 130 may open the outlet valve 102 so that the fire-fighting water inside the loading container 100 is discharged to the outside, and the reason is the same as described above.

In addition, in controlling the inlet valve 101, the outlet valve 102, and the pump 121, the control unit 130 may use a change of a pressure measured by the pressure sensor 103 inside the loading container 100 in addition to a temperature measured in the fire detector 110, and an embodiment of the present disclosure regarding the control unit 130 is as follows.

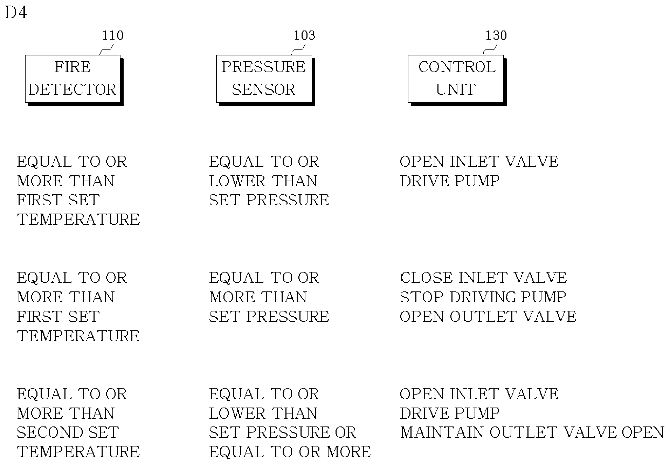

First, as illustrated in FIG. 4, when a temperature of the upper layer inside the loading container 100 increases to the first set temperature, the control unit 130 may open the inlet valve 101 and may drive the pump 121 so that fire-fighting water is introduced inside the loading container 100.

In addition, in a state in which the inlet valve 101 is opened, when a pressure inside the loading container 100 increases to a pressure equal to or more than a set pressure, the control unit 130 may close the inlet valve 101 and open the outlet valve 102 and may stop driving the pump 121 at the same time so that fire-fighting water inside the loading container 100 is discharged to the outside. After then, when a pressure inside the loading container 100 decreases to a pressure equal to or lower than the set pressure, the control unit 130 may close the outlet valve 102.

In addition, when a temperature inside the loading container 100 increases to a temperature equal to or more than a second set temperature, the control unit 130 may open the inlet valve 101 and the outlet valve 102 and may drive the pump 121 so that fire-fighting water is introduced inside the loading container 100 again.

That is, the control unit 130 is configured to introduce a large amount of fire-fighting water to the inside of the loading container 100 so that an electric fire occurring inside the loading container 100 is extinguished. Furthermore, in a situation in which a pressure inside the loading container 100 rapidly increases due to various causes such as explosion of devices such as battery cells, the control unit 130 closes the inlet valve 101 so as to prevent additional increase in pressure due to the inflow of fire-fighting water, and the control unit 130 opens the discharge valve 102 at the same time so that a pressure inside the loading container 100 decreases.

Meanwhile, the first set temperature is a preset temperature in consideration of heat generated by the plurality of battery cells provided inside the container 100 and of a temperature change due to a season, and is a high temperature that can only be reached by a fire. Furthermore, in considering that the temperature at which the conventional fire alarm device is activated is 70 °C, it is preferable that the first set temperature is set to any one value in a temperature range of 70 °C to 90 °C.

In addition, the second set temperature is a temperature for determining a reignition inside the loading container 100. In considering that a temperature of the upper layer inside the loading container 100 is in a heated state, it is preferable that the second set temperature set to a temperature equal to or more than the first set temperature.

However, the first set temperature and the second set temperature may be automatically changed according to a temperature outside the loading container 100. Furthermore, for the realization of such a configuration, an external temperature sensor configured to measure a temperature is provided outside the loading container 100, so that the first set temperature and the second set temperature may be automatically changed by the control unit 130.

Such a configuration is provided in consideration of a phenomenon in which a temperature inside the loading container 100 has a higher temperature than at other times when the cooling and heating device does not work or malfunctions while the loading container 100 is in a state in which a temperature of a place where the loading container 100 is currently positioned is at a high temperature equal to or more than 30 °C. In this case, a change range of the first set temperature and the second set temperature may be formed in a range of 0.3 °C to 0.35 °C whenever an external temperature increases by 1 °C with 30 °C as a reference temperature.

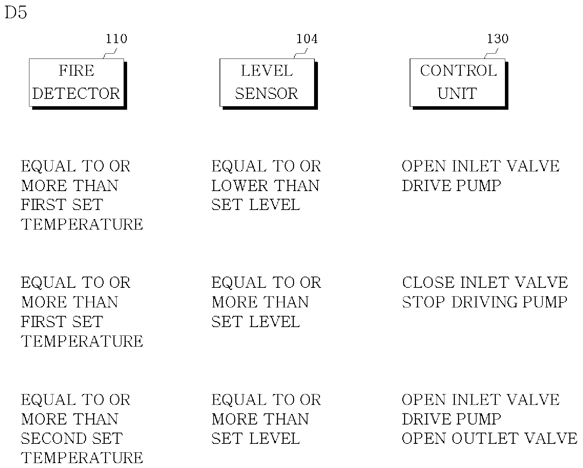

In addition, as illustrated in FIG. 5, when a temperature inside the loading container 100 increases to a temperature equal to or more than the first set temperature that is preset, the control unit 130 may open the inlet valve 101 constituted of a solenoid valve and may drive the pump 121 at the same time so that fire-fighting water is introduced inside the loading container 100 along the feeding hose. Furthermore, in a state in which the inlet valve 101 is opened, when a level inside the loading container 100 is detected to be equal to or more than a set level, the control unit 130 may close the inlet valve 101.

Therefore, the inside of the loading container 100 in which an electric fire is occurring is gradually submerged by a large amount of fire-fighting water fed from the outside by the feeding part 120, but an increase of a level is prevented by closing the inlet valve 101 when a level detected by the level sensor 104 is equal to or more than the set level.

In addition, as illustrated in FIG. 5, in a state in which a level inside the loading container 100 is equal to or more than the set level, when a temperature inside the loading container 100 increases to a temperature equal to or more than the second set temperature, the inlet valve 101 and the outlet valve 102 may be simultaneously opened.

That is, the control unit 130 is configured to introduce a large amount of fire-fighting water to the inside of the loading container 100 so that an electric fire occurring inside the loading container 100 is extinguished. However, the battery cells may ignite for a considerable amount of time even in a state in which the battery cells are submerged in fire-fighting water. In this case, a temperature of the fire-fighting water introduced inside the loading container 100 gradually increases.

Therefore, in the present disclosure, when a temperature inside the loading container 100 increases to a temperature equal to or more than the second set temperature while a level inside the loading container 100 is equal to or more than the set level, the inlet valve 101 and the outlet valve 102 are opened simultaneously, so that the level inside the loading container 100 is capable of being maintained and, at the same time, the fire-fighting water that is in a heated state is capable of being replaced with new fire-fighting water.

Meanwhile, as described above, since the loading container 100 is a container having a box shape, the loading container 100 may be mounted on a transportation means such as a truck and so on, and then is capable of being mounted on an electric propulsion ship. In some cases, the loading container 100 may provide a power to the electric propulsion ship or other devices even while being mounted on a transportation means such as a truck and so on.

At this time, the loading container 100 may have an outside thereof provided with a plurality of supporting parts so that the loading container 100 is firmly supported without shaking while the loading container 100 is in a state in which the loading container 100 is mounted on a transportation means such as a truck and so on or is mounted on the electric propulsion ship.

While the present disclosure has been described with reference to the particular illustrative embodiments, it is not to be restricted by the embodiments but only by the appended claims. It is to be appreciated that those skilled in the art can change or modify the embodiments without departing from the scope and spirit of the present disclosure.

In the description, components having no relation with the explanation of the present disclosure are not shown in the drawings for the clarity of the description, and the widths, lengths, and thicknesses of the components shown in the drawing may be magnified or reduced.

In addition, the same reference numerals throughout the specification represent the same or similar components.

### INDUSTRIAL APPLICABILITY

A system for extinguishing a fire in a battery loading container in an electric propulsion ship according to the present disclosure is industrially applicable since there is an effect that a damage caused by an electric fire occurring at sea is minimized and the electric fire is rapidly and effectively extinguished.

## Claims

1. A system for extinguishing a fire in a battery loading container in an electric propulsion ship, the system comprising:
a box-shaped mobile loading container (100) having a first side of an upper end thereof provided with an inlet valve (101) for inflow of fire-fighting water and having a first side of a lower portion thereof provided with an outlet valve (102) for discharging the fire-fighting water, the loading container (100) having an inside formed with a space in which a power supply device that includes a plurality of battery cells is provided;
a fire detector (110) configured to detect the fire by measuring a temperature inside the loading container (100) while being in a state in which the fire detector (110) is provided at an upper portion side of the inside of the loading container (100);
a feeding part (120) configured to feed the fire-fighting water to the inside of the loading container (100) by using a feeding hose and a pump (121) connected to the inlet valve (101); and
a control unit (130) configured to control operations of the inlet valve (101), the outlet valve (102), and the pump (121) according to a temperature measured in the fire detector (110) .

2. The system of claim 1, wherein the inlet valve (101) and the outlet valve (102) are respectively constituted of solenoid valves,
a pressure sensor (103) configured to measure a pressure is provided inside the loading container (100),
the control unit (130) is configured to open the inlet valve (101) when a temperature inside the loading container 100 increases to a temperature equal to or more than a first set temperature, and
in a state in which the inlet valve (101) is opened, when a pressure inside the loading container (100) increases to a pressure equal to or more than a set pressure, the control unit (130) is configured to close the inlet valve (101) and open the outlet valve (102) at the same time, and is configured to close the outlet valve (102) when a pressure inside the loading container (100) decreases to a pressure equal to or lower than the set pressure.

3. The system of claim 2, wherein the control unit (130) is configured to open the inlet valve (101) and the outlet valve (102) again when a temperature inside the loading container (100) increases to a temperature equal to or more than a second set temperature.

4. The system of claim 1, wherein the inlet valve (101) and the outlet valve (102) are respectively constituted of solenoid valves,
a level sensor (104) configured to detect a level of the fire-fighting water introduced into the loading container (100) is provided inside the loading container (100),
the control unit (130) is configured to open the inlet valve (101) when a temperature inside the loading container 100 increases to a temperature equal to or more than a first set temperature, and
in a state in which the inlet valve (101) is opened, when a level inside the loading container (100) is detected to be equal to or more than a set level, the control unit (130) is configured to close the inlet valve (101).

5. The system of claim 2, wherein, in a state in which a level inside the loading container (100) is equal to or more than a set level, when a temperature inside the loading container (100) increases to a temperature equal to or more than a second set temperature, the control unit (130) is configured to open the inlet valve (101) and the outlet valve (102) .
